# EUROPEAN PATENT APPLICATION

(11) **EP 4 538 545 A1**
(43) Date of publication of application: **16.04.2025**
(21) Application number: 24205213.2
(22) Date of filing: 08.10.2024
(51) Int. Cl.: F16B 2/10, F16B 2/24, F16B 5/02, F16B 5/06, H02G 3/32, F16B 37/02

(54) **SNAP-ON BRACKET CLAMP ASSEMBLIES**

(30) Priority: 13.10.2023 US 202363590190 P; 30.09.2024 US 202418902178
(71) Applicant: HellermannTyton Corporation, Milwaukee, WI 53224 (US)
(72) Inventor: Spangler, Cabren, Menomonee Falls, Wisconsin (US); Gliniecki, Colin, West Bend, Wisconsin (US); Toll, Michael, Whitefish Bay, Wisconsin (US)
(74) Representative: Hernandez, Yorck

(57) **Abstract**

A snap-on bracket clamp assembly may include a metal bracket configured to attach to the support structure. A snap-on bracket clamp assembly may include a mounting clamp formed of a polymeric material, the mounting clamp configured to snap onto the metal bracket, the mounting clamp comprising: a first connector hingedly connected to a second connector, the first and second connectors configured to surround the object, and the first and second connectors configured to connect with one another to form the object into a bundle.

## Description

### CROSS-REFERENCE TO RELATED APPLICATION(S)

This application claims the benefit of U.S. Provisional Patent Application Serial No. 63/590,190 filed on October 13, 2023, the disclosure of which is incorporated by reference herein in its entirety.

### BACKGROUND

Mounting clamps are fastening devices that are utilized to secure one or more objects relative to a support structure (e.g., a mounting surface, a mount, a vehicle chassis, a trailer, a bracket, or the like). A mounting clamp may further be utilized to combine one or more objects (e.g., wires, harnesses, hoses, tubes, cables, and the like) into a bundle, which may, in turn, be secured to the support structure. An example mounting clamp includes a first connector hingedly connected to a second connector, the first and second connectors configured to surround an object or bundle and connecting with one another.

One type of a mounting clamp is a bolt mount ratchet clamp, which includes a first connector hingedly connected to a second connector and a mount defined in one of the first connector or the second connector. The first and second connectors may be configured to engage through a ratchet mechanism with one another. The mount defines an orifice therethrough that is configured to receive a bolt. The bolt can be passed through a counterbore aligned with the orifice, through the orifice, and into engagement with a threaded hole in the support structure, enabling the mounting clamp to be fastened to a support structure, with the head of the bolt bearing down onto the material of the mount (e.g., bearing down onto a plastic boss surrounding the orifice). When the material of the mount is plastic, the bolt mount ratchet clamp is best used for low- to medium-torque applications, so as to prevent the plastic boss from being plastically deformed and/or cracking. For high-torque applications, a metal compression limiter may be integrated into the orifice. The inclusion of a metal compression limiter is not suitable for all applications.

Another type of a mounting clamp is referred to as a "P-clamp." A P-clamp is named due to its shape, which can be P-shaped. A P-clamp includes a first connector hingedly connected to a second connector and an offset mount (e.g., a flange extending from one of the first connector or the second connector).

### SUMMARY

This document describes snap-on bracket clamp assemblies. In aspects, the snap-on bracket clamp assemblies are snap-on bracket P-clamp assemblies. The snap-on bracket clamp assemblies may be adjustable.

In some aspects, the techniques described herein relate to an apparatus comprising: a clamp comprising: a connector, the connector defines a first passageway configured to enclose at least a portion of an object; and a mounting member defined on the connector, the mounting member includes a first retainer; and a bracket comprising: a base that includes at least one second retainer configured to connect to the first retainer to connect the clamp to the bracket; and a support structure connector configured to attach the bracket to a support structure.

In some aspects, the techniques described herein relate to an apparatus comprising: a metal bracket configured to attach to a support structure; and a mounting clamp formed of a polymeric material, the mounting clamp configured to snap onto the metal bracket, the mounting clamp comprising: a first connector hingedly connected to a second connector, the first and second connectors configured to surround an object, and the first and second connectors configured to connect with one another to form the object into a bundle.

In some aspects, the techniques described herein relate to a clamp assembly configured to secure an object to a support structure, the clamp assembly including: a metal bracket configured to attach to the support structure; and a mounting clamp formed of a polymeric material, the mounting clamp configured to snap onto the metal bracket, the mounting clamp including: a first connector hingedly connected to a second connector, the first and second connectors configured to surround the object, and the first and second connectors configured to connect with one another to form the object into a bundle.

In some aspects, the techniques described herein relate to a clamp assembly configured to secure an object to a support structure, the clamp assembly including: a clamp, the clamp including: a first connector, the first connector defining a first passageway configured to enclose at least a portion of the object; a second connector, the second connector defining a second passageway configured to enclose the at least a portion of the object; and a mounting member defined on the first connector, the mounting member including a first retainer portion and a second retainer portion; and a bracket, the bracket including: a base, the base including at least one of a third retainer portion configured to connect with the first retainer portion to connect the clamp to the bracket or a fourth retainer portion configured to connect with the second retainer portion to connect the clamp to the bracket; and a support structure connector configured to attach the bracket to the support structure.

This Summary is provided to introduce simplified concepts of snap-on bracket clamp assemblies, which are further described below in the Detailed Description and are illustrated in the Drawings. This Summary is not intended to identify essential features of the claimed subject matter, nor is it intended for use in determining the scope of the claimed subject matter.

### BRIEF DESCRIPTION OF THE DRAWINGS

The details of one or more aspects of snap-on bracket clamp assemblies are described with reference to the following Drawings, in which the use of the same numbers in different instances may indicate like features and/or components.
FIG. 1 is an exploded, top, front perspective view of a clamp assembly.
FIG. 2 is a side view of the clamp assembly of FIG. 1.
FIG. 3 is a bottom, front perspective view of the clamp assembly of FIG. 1, which illustrates the clamp in an open position.
FIG. 4 is a cross-sectional view along line 4-4 of FIG. 3, which illustrates an environment.
FIG. 5 is a cross-sectional view of a clamp assembly.
FIG. 6 is a side view of a clamp assembly.
FIG. 7A is a top, rear perspective view of a clamp assembly.
FIG. 7B is a cross-sectional view along line 7B-7B in FIG. 7A.
FIG. 7C is a side view of the clamp assembly of FIG. 7B, illustrated in a closed position.
FIG. 8A is an exploded, bottom, rear perspective view of a clamp assembly.
FIG. 8B is a bottom, rear perspective view of the clamp assembly of FIG. 8A.
FIG. 8C is a cross-sectional view along line 8C-8C of FIG. 8B.
FIG. 9A is an exploded, top, rear perspective view of a clamp assembly.
FIG. 9B is a top, rear perspective view of the clamp assembly of FIG. 9A.
FIG. 9C is a cross-sectional view along line 9C-9C of FIG. 9B.
FIG. 9D is a top, rear perspective view of a bracket of a clamp assembly.
FIG. 10A is an exploded, top, rear perspective view of a clamp assembly.
FIG. 10B is a top, rear perspective view of the clamp assembly of FIG. 10A.
FIG. 10C is a cross-sectional view along line 10C-10C of FIG. 10B.
FIG. 11A is an exploded, bottom, rear perspective view of a clamp assembly.
FIG. 11B is a bottom, rear perspective view of the clamp assembly of FIG. 11A.
FIG. 11C is a partial, cross-sectional view along line 11C-11C of FIG. 11B.
FIG. 12 is a top, rear perspective view of a bracket of a clamp assembly.
FIG. 13 is a bottom, rear perspective view of a clamp, which illustrates an environment.

### DETAILED DESCRIPTION

This document describes snap-on bracket clamp assemblies (herein a "clamp assembly" and/or "clamp assemblies"). In aspects, a snap-on bracket clamp assembly is a snap-on bracket adjustable P-clamp. Optional features of one aspect described herein may be combined with other aspects to form further aspects. Aspects described in the present disclosure address technical problems associated with the routing, securement, and/or connection of electrical cables to support structures.

In a general aspect, a snap-on bracket clamp assembly includes a metal bracket and a mounting clamp. The mounting clamp is configured to connect to the metal bracket (e.g., snap onto the metal bracket). In this way, the problem of damage caused to the plastic bosses of a mounting clamp as a result of torquing a fastener (e.g., bolt) that extends through the mounting clamp is solved through the attachment of the mounting clamp to a detachable metal bracket that can be properly torqued to the support structure. As a result, the attachment surface that the fastener engages is moved from the mounting clamp to the metal bracket. Further, in this way, the problem of bolt loosening in plastic clamps due to lack of torque is solved by the attachment of the mounting clamp to the detachable metal bracket that can be properly torqued to the support structure. Further in this way, the problem of needing to open a mounting clamp holding a bundle (e.g., harness) to access a fastener (e.g., mounting bolt head) is solved by making the clamp detachable from the support structure without first needing to open the mounting clamp.

The metal bracket includes a support structure connector. In aspects, the support structure connector is an aperture defined through a base of the metal bracket, the aperture configured to receive a stud shaft extending from the support structure. In other aspects, the base may include at least one barbed arm extending therefrom, the barbed arm configured to engage a stud shaft of the support structure to attach the base to the support structure. In other aspects, the metal bracket is attached to the support structure through adhesive bonding, welding, and the like.

The mounting clamp may be a bolt mount ratchet clamp, which includes a first connector (e.g., first clamp member) hingedly connected to a second connector (e.g., second clamp member) and a mount defined in one of the first connector or the second connector. The first and second connectors may be configured to surround one or more objects and connecting with one another to form a bundle. In this way, the snap-on bracket clamp assembly may be utilized to secure one or more objects relative to a support structure (e.g., a mounting surface, a vehicle chassis, a trailer, a bracket, or the like) and may be utilized to combine one or more objects (e.g., wires, harnesses, hoses, tubes, cables, and the like) into a bundle, which may, in turn, be secured to the support structure.

The metal bracket may define an orifice therethrough that is configured to receive a fastener (e.g., bolt). In some aspects, the techniques described herein relate to a clamp assembly, where the first connector defines a counterbore therethrough and the support structure connector is accessible through the counterbore when the clamp is connected to the bracket. In aspects, at least one of the first connector or the second connector includes a counterbore defined therethrough. The counterbore provides access to an orifice defined in the metal bracket, enabling a fastener to be inserted through the counterbore and into engagement with the metal bracket (e.g., threaded bolt and a threaded hole). The fastener can be passed through a counterbore aligned with the orifice, through the orifice, and into engagement with the support structure (e.g., engagement with a threaded hole in the support structure). This enables the mounting clamp to fasten the mounting clamp assembly onto a support structure, with the fastener (e.g., head of the bolt) bearing down onto the material of the mount (e.g., bearing down onto a plastic boss surrounding the orifice). The mounting clamp can then be closed.

In other aspects, at least one of the first connector or the second connector includes a fastener cover compartment configured to cover a fastener inserted through the metal bracket upon the snapping of the mounting clamp onto the metal bracket. The fastener can be passed through the orifice and into engagement with the support structure (e.g., engagement with a threaded hole in the support structure); this enables the mounting clamp to fasten the mounting clamp assembly onto a support structure, with the fastener (e.g., head of the bolt) bearing down onto the material of the mount (e.g., bearing down onto a plastic boss surrounding the orifice). The mounting clamp can then be attached to (e.g., snapped onto) the metal bracket, with the fastener cover compartment covering the fastener. This attachment can be performed before or after the mounting clamp is closed.

In aspects, the mounting clamp includes a first connector having a first side opposite a second side, a second connector including a second side, and a hinge member that hingedly connects the second side of the first connector to the second side of the second connector. The first connector includes a first locking mechanism and the second connector includes a second locking mechanism. The first and second locking mechanisms are configured to lock a position of respective second ends of the first and second connectors together around the object with the object received in a passageway defined between the first and second connectors. The first locking mechanism may include a slotted opening defined by the first connector, and the second locking mechanism may include a tongue member projecting from the second connector. The tongue member may further include a plurality of serrations extending along a length of the tongue member and across a width of the tongue member. The tongue member may be configured to be received in the slotted opening. The first locking mechanism may further include a pawl defined in the first connector, the pawl having a plurality of teeth disposed within the slotted opening. The plurality of teeth may be configured to interlock with the plurality of serrations when the tongue member is inserted into the slotted opening. In this way, the clamp assembly is adjustable.

A snap-on bracket clamp assembly may be utilized with a wire harness for equipment (e.g., vehicle, generator) that is pre-assembled by a Tier Supplier remotely from the assembly plant that assembles the equipment. Such a wire harness may include one or more routing and/or clipping fasteners (e.g., a clamp) installed at one or more predetermined locations on the harness that correspond to predetermined mounting locations on the equipment. Utilizing the disclosed snap-on bracket clamp assemblies, one or more metal brackets may be preinstalled at the predetermined mounting locations on the equipment, the harness could then be routed across the predetermined mounting locations (e.g., at the metal brackets), and then the clamps of the snap-on bracket clamp assembly could be pushed and/or snapped into the previously installed metal brackets to complete the installation.

These are but a few examples of how the described clamp assemblies may be used to address technical problems associated with mounting clamps utilized to secure one or more objects relative to a support structure. Other examples and implementations are described throughout this document.

Described herein and illustrated in the Drawings are aspects of snap-on bracket clamp assemblies (herein referred to as a "clamp assembly" and/or "clamp assemblies"). The clamp assemblies may be configured to secure an object to a support structure. The clamp assembly may include a metal bracket configured to attach to the support structure and a mounting clamp formed of a polymeric material. The clamp assembly may include a mounting clamp that is configured to snap onto the metal bracket. The mounting clamp may include a first connector hingedly connected to a second connector, with the first and second connectors configured to surround the object and connecting with one another to form a bundle.

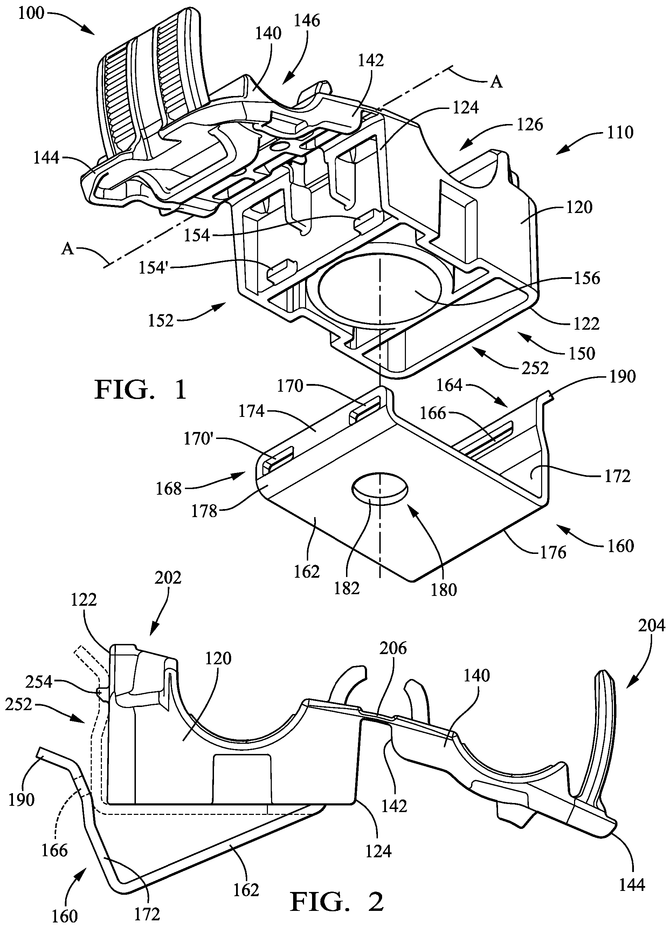

A clamp assembly 100 is illustrated in FIGs. 1-4. The clamp assembly 100 is configured to secure an object (e.g., object 408) to a support structure (e.g., support structure 440). The clamp assembly 100 includes a clamp 110 and a bracket 160. The bracket 160 is configured to connect to the clamp 110 (e.g., configured to snap onto the clamp).

The clamp 110 includes a connector (e.g., a first connector 120 and a second connector 140). The clamp 110 is configured to clamp around or to the object 408. The first connector 120 has a first side 122 opposite a second side 124, and the second connector 140 has a first side 144 opposite a second side 142. The first side 122 and the second side 124 may be located on opposite sides of the first connector 120, and the first side 144 and second side 142 may be located on opposite sides of the second connector 140.

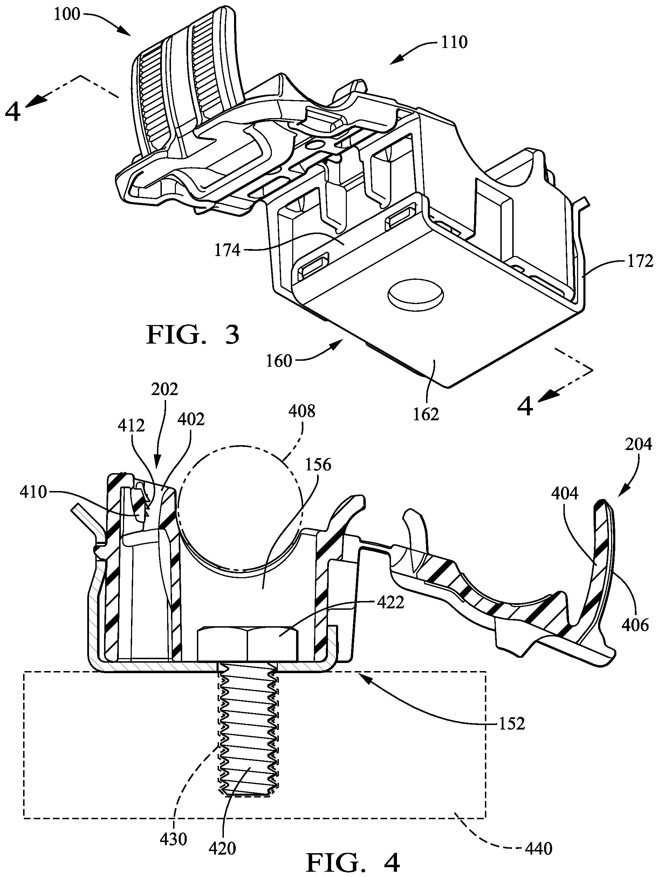

The connector (e.g., at least one of the first connector 120 or the second connector 140) defines a passageway configured or shaped to enclose at least a portion of the object 408. In FIGs. 1-4, the first connector 120 defines a first passageway 126 that is configured to enclose at least a portion of the object 408 and the second connector 140 defines a second passageway 146 that is configured to enclose the at least a portion of the object 408. The first passageway 126 may align with the second passageway 146 when the first connector 120 and the second connector 140 are positioned in a clamped position to form a passageway that encloses the at least a portion of the object 408 when the clamp 110 is in a closed position, for example as illustrated in FIG. 4. In aspects, the first and second connectors 120, 140 may define matching curved first and second passageways that are substantially symmetrical and/or are shaped to enclose at least a portion of the object 408 to engage and retain the object 408 to the support structure 440. In aspects, the first and second passageways are semi-circular shaped. In aspects, a connector may define a passageway by enclosing a passageway in the other connector. At least one of the first passageway 126 or the second passageway 146 may form a saddle portion configured to support the at least a portion of the object 408.

The clamp 110 may include a hinge member 206 that hingedly connects the first connector 120 to the second connector 140. For example, the second side 124 of the first connector 120 may hingedly connect to the second side 142 of the second connector 140 via the hinge member 206. The hinge member 206 defines a hinge axis (A). The first connector 120, hinge member 206, and second connector 140 may be integrally formed through an injection molding process or another suitable process.

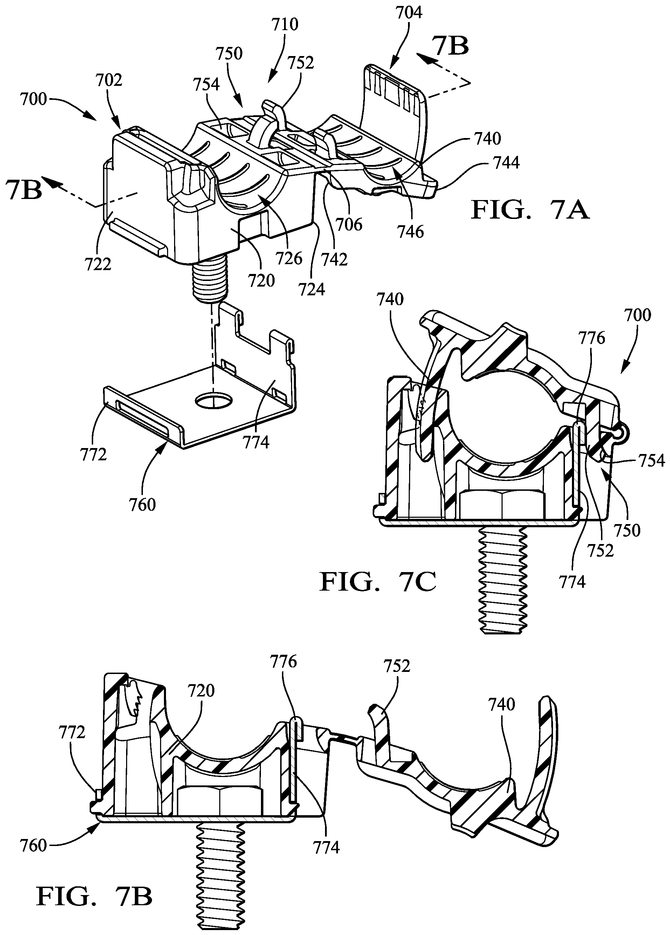

In FIGs. 1-4, the clamp 110 is illustrated in an open position. The clamp 110 includes one or more locking mechanisms that are configured to lock a position of the first connector 120 relative to a position of the second connector 140. The position may be locked in one or more locked positions. In this way, the clamp 110 can be adjusted to receive one or more objects of varying sizes or diameters therein. For example, as illustrated in FIG. 7C, exposed clamp serrations reveal considerable further adjustment remaining available for securing smaller bundle diameters.

In the aspect illustrated in FIGs. 1-4, the first connector 120 includes a first locking mechanism 202 and the second connector 140 includes a second locking mechanism 204. The first and second locking mechanisms 202, 204 are configured to lock a position of the first and second connectors 120, 140 (e.g., respective second ends of the first and second connectors) together around the object 408, in a partially closed position or a closed position, with the object 408 received in the first passageway 126 and/or second passageway 146.

A locking mechanism may include a slotted opening defined in at least one of the connectors (e.g., first connector 120, second connector 140). For example, the first locking mechanism 202 may include a slotted opening 402 defined by the first connector 120. The second locking mechanism 204 may include a tongue member 404 projecting from the second connector 140 and configured to be received in the slotted opening 402. The tongue member 404 may include a plurality of serrations 406 extending along a length of the tongue member 404 and across a width of the tongue member 404. The serrations 406 may extend from the tongue member 404 and/or may be defined within the tongue member 404. The first locking mechanism 202 may include a pawl 410 defined in the first connector 120, the pawl 410 having a plurality of teeth 412 disposed within the slotted opening 402. The teeth 412 are configured to interlock with the serrations 406 when the tongue member 404 is inserted into the slotted opening 402.

The bracket 160 includes a base 162 configured to connect with the clamp 110. The base includes at least one second retainer configured to connect to the first retainer (e.g., first retainer portion 252) to connect the clamp to the bracket. The base 162 may include a first arm 172 and a second arm 174. In aspects, the first and second arms 172, 174 extend orthogonally from the base 162, as illustrated in FIG. 1. The first arm 172 may extend from a first end 176 of the base 162, and the second arm 174 may extend from an opposite second end 178 of the base 162. At least one first retention slot 166 may be defined in the second arm 174, and at least one second retention slot (e.g., second retention slot 170, second retention slot 170') may be defined on the first arm 172. In such a configuration, the second arm 174 and the first arm 172 are oriented in parallel planes. In other aspects, the second arm 174 and the first arm 172 may be oriented in planes that are not parallel. One or more of the first arm 172 or the second arm 174 may be configured to flex relative to the base 162. For example, in the aspect illustrated in FIG. 2, the second arm 174 is configured to flex outwards relative to the base 162 in order to enable the first retention slot 166 of the first connector 120 to snap over a first retention tab 254 at a first retainer portion 252.

The bracket 160 may include a release mechanism 190 configured to release the at least one first retention tab 254 from the at least one first retention slot 166 to permit the bracket 160 to be unlocked from the clamp 110. In aspects, the release mechanism 190 is defined by a bend in the arm (e.g., first arm 172) that forms an outwardly extending tail leg that is configured to be digitally or mechanically manipulated through applying an outward force to the release mechanism 190 to enable the retention slot (e.g., retention slot 166) to be disengaged from the retention tab (e.g., retention tab 254). Upon disengagement, the bracket 160 can be rotated so that the first retention portion and a second retainer portion (e.g., first retainer portion 252, second retainer portion 152) can be disconnected from engagement with one another.

The bracket 160 further includes a support structure connector 180 defined in the base 162. The support structure connector 180 is configured to attach the bracket 160 to the support structure 440. In aspects, the support structure connector 180 includes an aperture 182 defined through the base 162. The aperture 182 may be configured to receive a fastener 420 (e.g., threaded bolt) that is configured to engage through threads with a threaded orifice 430 defined in the support structure 440 to attach the base 162 to the support structure 440. In another aspect, a support structure connector may be configured to bond through an adhesive, weld, or otherwise attach to a support structure.

The clamp 110 further includes a mounting member 150 configured to mount the clamp 110 to the bracket 160. The mounting member 150 may be defined on the connector (e.g., on the first connector 120 and/or the second connector 140). In the aspect illustrated in FIG. 1, the mounting member 150 is defined in the first connector 120. The bracket 160 may be attached to the clamp 110 before or after the object(s) are inserted into the passageway. Further, the clamp assembly 100 may be installed on the support structure 440 before or after the objects are inserted into the passageway.

The mounting member 150 includes a first retainer. The first retainer of the mounting member 150 may include the first retainer portion 252 on the first side 122 and the second retainer portion 152 on the second side 124. The first and second retainer portions 252, 152 may be configured to engage with third and fourth retainer portions of a second retainer located on the bracket 160 (e.g., on a base of the bracket) to retain the clamp 110 to the bracket 160 (e.g., to connect the clamp to the bracket). In the aspect illustrated in FIGs. 1-4, the bracket 160 includes at least one retainer portion configured to connect with at least one retainer portion located on the clamp 110. For example, the bracket 160 may include a retainer portion 164 (e.g., third retainer portion) configured to connect with the first retainer portion 252 of the clamp 110 and a retainer portion 168 (e.g., fourth retainer portion) configured to connect with the second retainer portion 152 of the clamp 110 to connect the clamp 110 to the bracket 160. In aspects, the retainer portion 164 may form a large, angled release lever operable by a user to quickly release without needing to utilize a separate tool. For example, where a user needs to quickly remove an attached wire harness and/or electrical components from a vehicle or other equipment without a tool. In such a use case, the user could manipulate the retainer portion 164 manually (without needing to utilize a tool) to disengage the clamp 110 (and any objects held therein (e.g., a wiring harness attached to an electrical component)) from the bracket 160 and remove the clamp/object assembly from the vehicle.

The first retainer portion 252 may include the at least one first retention tab 254 on the first side 122, and the second retainer portion 152 may include at least one second retention tab (e.g., second retention tab 154, second retention tab 154') on the second side 124. The third retainer portion 164 may include the at least one first retention slot 166 on the second arm 174 and the fourth retainer portion 168 may include at least one second retention slot (e.g., second retention slot 170, second retention slot 170') on the first arm 172. The at least one first retention slot 166 is configured to be received onto the at least one first retention tab 254, and the at least one second retention slot 170, 170' is configured to be received onto the at least one second retention tab 154, 154' to connect the bracket 160 to the clamp 110. In aspects, the position of a slot or a retention slot may positioned differently than is illustrated in FIGs. 1-4. For example, while the first retention slot 166 is illustrated distal to the base 162 in FIG. 1, in other aspects the first retention slot 166 may be located at another position along the first arm 172. In other aspects, the slots may be tabs and the tabs may be slots.

FIG. 1 illustrates the bracket 160 before installation onto the clamp 110. In FIG. 2, the second retention slots 170, 170' are illustrated snapped onto the second retention tabs 154, 154', with the first arm 172 pivoting upwards to bring the at least one first retention slot 166 towards the at least one first retention tab 254. FIG. 3 illustrates the bracket 160 snapped onto the clamp 110, after the at least one first retention slot 166 has been snapped onto the at least one first retention tab 254. FIG. 4 illustrates the clamp 110 joined to the bracket 160 and then installed on the support structure 440 via a fastener. In this aspect, the fastener 420 is a threaded bolt inserted into the threaded orifice 430 in the support structure 440, the threaded bolt bearing against the base 162. In such a configuration, the clamp 110 may be removed from the bracket 160 by disengaging the retainer portions and/or the clamp assembly 100 may be removed from the support structure 440 by removing the fastener (e.g., removing the threaded bolt from the threaded orifice 430).

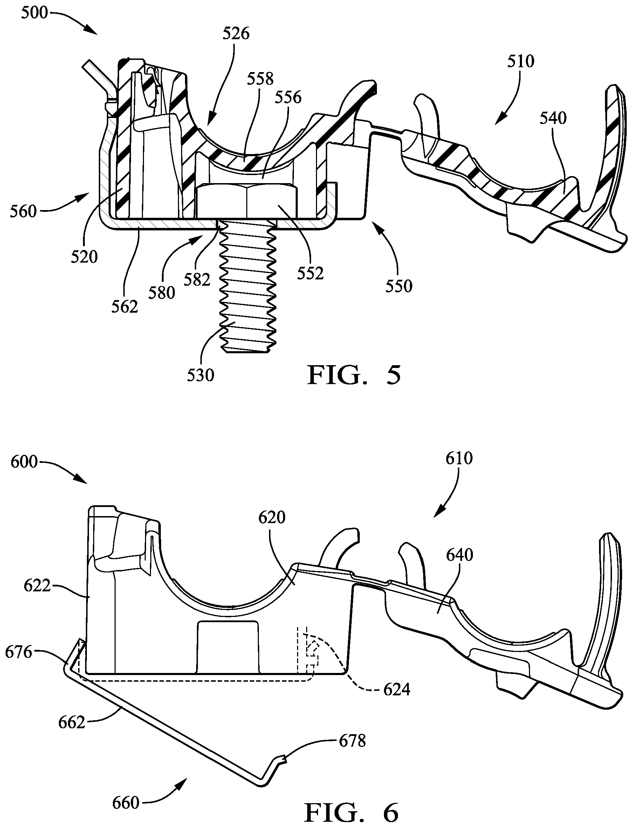

In the aspect illustrated in FIGs. 1-4, the first connector 120 defines a counterbore 156 therethrough and the support structure connector 180 is accessible through the counterbore 156 when the clamp 110 is connected to the bracket 160. In the aspect illustrated in FIG. 4, the fastener 420 (e.g., threaded bolt) includes a head 422 and is positioned through the counterbore 156 to enable the fastener 420 to be threaded into the threaded orifice 430. The counterbore 156 is sized to receive the head 422 of the fastener 420, and the counterbore 156 in this aspect is open-ended at a passageway side of the counterbore 156, which enables the head 422 to be accessible through the passageway side of the counterbore 156 when the clamp 110 is connected to the bracket 160. An open-ended counterbore may further provide for the utilization of a larger fastener, for example, a fastener having a larger head (e.g., hex head fastener, socket head fastener, flanged hex head fastener, 12-point screw fastener, nyloc nut (e.g., locknut with a nylon collar), nut with a protruding head, cap nut, wing nut, and the like). In such a configuration, the counterbore 156 is open-ended at the passageway side and at a mounting member side. As a result of the counterbore 156 being open-ended at the passageway side of the counterbore 156, as described above, the clamp assembly 100 may provide less of a saddle support area for receiving the object 408 than the clamp assembly 500 illustrated in FIGs. 5 and 7A-7C and described below. The counterbore 156 may be sized to receive a socket wrench configured to engage the head 422.

In use, the disclosed clamp assemblies (e.g., clamp assembly 100 illustrated in FIGs. 1-4) may provide a number of servicing and/or removal options. In a first example, the bracket 160 may be unsnapped from the clamp 110 and the bracket 160, which may include one or more clamped objects, is thus detached from the support structure (e.g., support structure 440). In a second example, the pawl 410 defined in the first connector 120 of the first locking mechanism 202 may be released from the serrations 406 of the tongue member 404 of the second locking mechanism 204, an object 408 (e.g., wire harness) held in the clamp assembly 100 can be lifted off the saddle portion defined in the first passageway 126 and/or the second passageway 146, a tool (e.g., a socket wrench) could then be used to loosen the fastener 420 (e.g., threaded bolt), and the fastener 420 could be removed. In this way, the clamp assembly 100 may provide clearance height for different fastener types that require more above mounting height (e.g., for taller bolt heads). For example, where the fastener 420 is a hex head fastener, socket head fastener, flanged hex head fastener, 12-point screw fastener, nyloc nut (e.g., locknut with a nylon collar), nut with a protruding head, cap nut, wing nut, and the like.

In use, the disclosed clamp assemblies (e.g., clamp assembly 500 illustrated in FIGs. 5, clamp assembly 700 illustrated in FIGs. 7A-7C) may provide a number of servicing and/or removal options. In a first example, the bracket 560 may be unsnapped from the clamp 510 and the bracket 560, which may include one or more clamped objects, is thus detached from the support structure. In a second example, a pawl defined in the first connector 720 of the first locking mechanism 702 may be released from serrations of a tongue member of the second locking mechanism 704 and an object (e.g., wire harness) held in the clamp assembly 500 can be lifted off the saddle portion defined in the first passageway 726 and/or the second passageway 746.

In other aspects, the counterbore may be close-ended at the passageway side of the counterbore, as illustrated, for example, in a clamp assembly 500 of FIG. 5. The clamp assembly 500 is similar to the clamp assembly 100 illustrated in FIGs. 1-4 and described above, except as detailed below. Thus, the clamp assembly 500 includes a clamp 510, a first connector 520, a first passageway 526, a second connector 540, a mounting member 550, a bracket 560 including a support structure connector 580 having an aperture 582 defined through a base 562, and a fastener 530 (e.g., threaded bolt) having a head 552. In the clamp assembly 100, as described above with respect to FIGs. 1-4, the first connector 120 defines the counterbore 156 therethrough and the support structure connector 180 is accessible through the counterbore 156 when the clamp 110 is connected to the bracket 160. The counterbore 156, in FIGs. 1-4, is open-ended at the passageway side of the counterbore 156, which enables the head 422 to be accessible through the passageway side of the counterbore 156 when the clamp 110 is connected to the bracket 160. In the clamp assembly 500 illustrated in FIG. 5, as well as in FIGs. 7A-7C, 8A-8C, 9A-9C, 10A-10C, 11A-11C, and 13, the first connector 520 may not include a counterbore defined through the first connector 520. Instead, the counterbore may be close-ended at the passageway side, forming a fastener receiving chamber 556 (e.g., counterbore) that includes a closed end 558. In such a configuration, a lower side of the mounting member 550 defines the fastener receiving chamber 556 (e.g., a bolt head receiving chamber, counterbore). The closed end 558 prevents access to the support structure connector 580 through the counterbore (e.g., fastener receiving chamber 556) when the clamp 510 is connected to the bracket 560. In aspects, the closed end 558 provides uniform engagement, support, and/or clamping of the bundle of objects. As a result of the fastener receiving chamber 556 being close-ended at the passageway side of the fastener receiving chamber 556, the clamp assembly 500 may provide a greater saddle support area for receiving the object than the clamp assembly 100 illustrated in FIGs. 1-4.

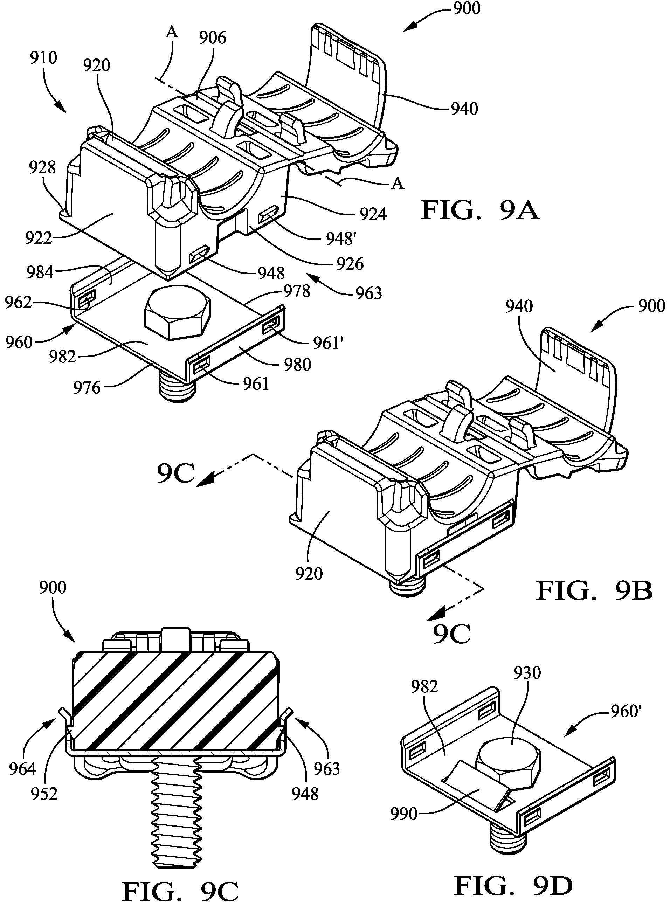

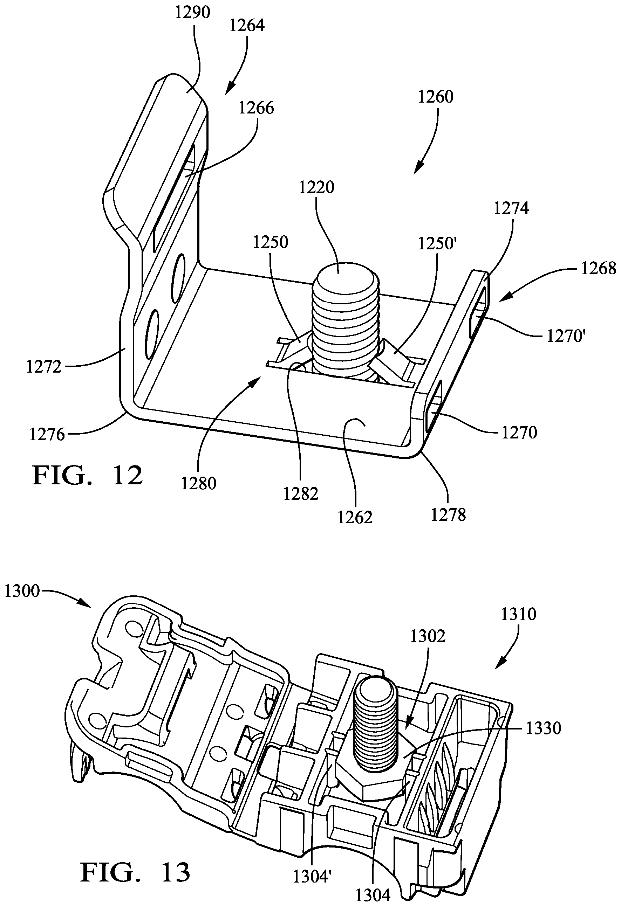

As a result of a closed end (e.g., closed in 558 in clamp assembly 500, closed end in clamp assembly 700), the head of the fastener may not be accessible through the saddle portion of the first connector. In this way, the fastener may need to attach the bracket to the support structure before the clamp is attached to the bracket (e.g., by turning the bolt head tight to the required torque specification before the clamp is snapped into bracket). Alternatively, a lanced tab (described with respect to FIG. 9D below), a nut (also described with respect to FIG. 9D below), flanges (e.g., flange 1304, flange 1304' described with respect to FIG. 13 below), or another structure may be provided to permit the fastener to attach the bracket to the support structure after the clamp is attached to the bracket.

As discussed above, FIG. 2 illustrates the second retention slots 170, 170' snapped onto the second retention tabs 154, 154', with the first arm 172 pivoting upwards to bring the at least one first retention slot 166 towards the at least one first retention tab 254. In this configuration, the clamp 110 pivots at the second retention tabs 154, 154', which are illustrated adjacent to the second side 124. In other aspects, the second retention tabs may be located on an opposite side of the clamp (e.g., as illustrated in a clamp assembly 600 of FIG. 6). The clamp assembly 600 is similar to the clamp assembly 100 illustrated in FIGs. 1-4 and described above, except as detailed below. Thus, the clamp assembly 600 includes a clamp 610, a first connector 620, a first side 622, a second side 624, a second connector 640, a bracket 660, and a base 662. In FIG. 6, the second side 624 is a side of an internal wall. The bracket 660 includes a first end 676 and a second end 678. In comparison to the clamp assembly 100, retention tab(s) of a first retention portion are located on a second side of the first connector 620, retention tab(s) of a second retention portion are located on a first side of the first connector 620, retention slot(s) of a third retention portion are located on the second end 678 of the bracket 660, and retention slot(s) of a fourth retention portion are located on the first end 676 of the bracket 660. In such a configuration, the first end 676 of the bracket 660 snaps onto the clamp 610 at the first side 622 of the clamp 610 and then the second end 678 of the bracket 660 snaps onto the clamp 610 at the second side 624.

FIGs. 7A-7C illustrate another clamp assembly 700. The clamp assembly 700 is similar to the clamp assembly 100 illustrated in FIGs. 1-4 and described above, except as detailed below. Thus, the clamp assembly 700 includes a clamp 710, a first connector 720 joined to a second connector 740 by a hinge member 706, the first connector 720 having a first side 722 opposite a second side 724, the second connector 740 having a first side 744 opposite a second side 742, a first locking mechanism 702, a second locking mechanism 704, a bracket 760, a first arm 772, and a second arm 774. The first connector 720 includes the first locking mechanism 702, and the second connector 740 includes the second locking mechanism 704. The first and second locking mechanisms 702, 704 are configured to lock a position of the first and second connectors (e.g., respective second sides 724, 742 of the first and second connectors 720, 740) together around an object (e.g., object 408 in FIG. 4), in a partially closed position or a closed position, with the object received in a first passageway 726 and/or a second passageway 746.

The clamp assembly 700 further includes a hinge interlock mechanism 750 that is configured to interlock a hinge member end of the clamp assembly 700 together when the clamp assembly 700 is in its closed position, as illustrated in FIG. 7C. For example, the hinge interlock mechanism 750 interlocks the first side 722 of the first connector 720 and the first side 744 of the second connector 740 together when the first and second locking mechanisms 702, 704 lock a position of the respective second sides 724, 742 of the first and second connectors 720, 740 together.

The hinge interlock mechanism 750 includes at least one arcuate projection 752 extending from at least one of the first connector 720 or the second connector 740. The hinge interlock mechanism 750 further includes at least one arcuate channel 754 extending into at least one of the first connector 720 or the second connector 740. The arcuate projection 752 is configured to be received into a corresponding arcuate channel 754. When the clamp assembly 700 is in its closed position, as illustrated in FIG. 7C, the interaction of the interlocking arcuate projection 752 in the arcuate channel 754 provides a secondary retention across the hinge member 706 that interlocks the clamp assembly 700 together in the unlikely event of a failure of the hinge member 706.

The hinge interlock mechanism 750 includes a locking portion 776 defined on at least one of the first arm 772 or the second arm 774. In the aspect illustrated in FIG. 7C, when the clamp assembly 700 is in its closed position, the locking portion 776 of the second arm 774 extends through the second connector 740 and into the arcuate channel 754. The locking portion 776 of the second arm 774 engages (e.g., interference fit) the arcuate projection 752 within the arcuate channel 754 and prevents its withdrawal, further increasing the strength of the secondary retention.

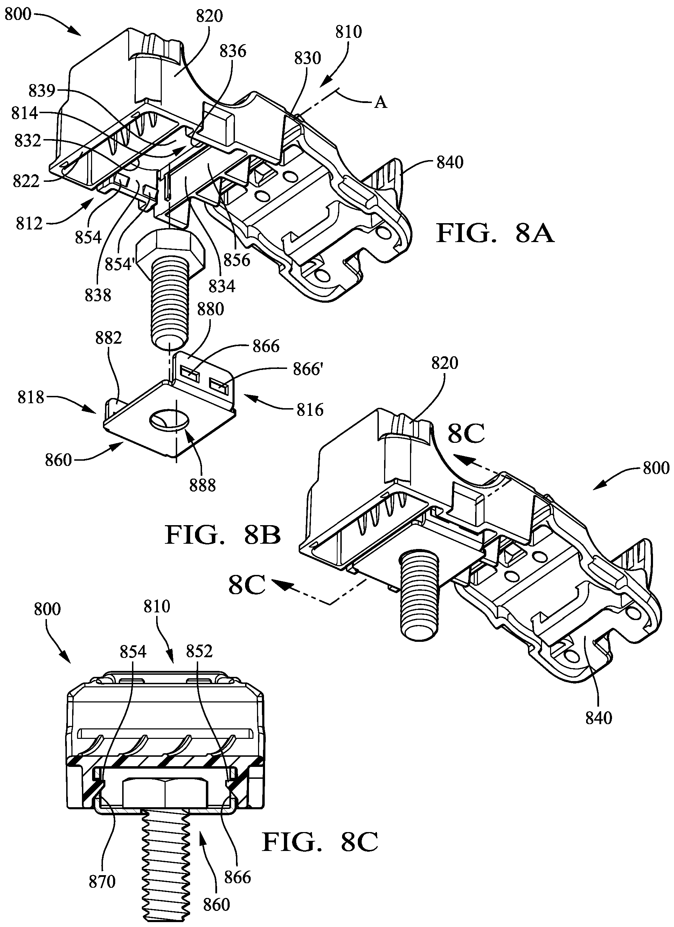

As discussed above, FIGs. 1 and 2 illustrate the first retention tab 254 and the second retention tabs 154, 154' as extending outwards from the clamp 110. In other aspects, a retention tab may extend inwards. For example, FIGs. 8A-8C illustrate a clamp assembly 800. The clamp assembly 800 is similar to the clamp assembly 100 illustrated in FIGs. 1-4 and described above, except as detailed below. Thus, the clamp assembly 800 includes a clamp 810, a connector (e.g., a first connector 820 connected at a hinge member 830 to a second connector 840), a hinge axis (A), a first retainer portion 812, a second retainer portion 814, a third retainer portion 816, a fourth retainer portion 818, and a bracket 860. The first retainer portion 812 is defined on a first end 838, and the second retainer portion 814 is defined on a second end 836.

The clamp assembly 800 includes at least one internal first retention tab 852 defined on the second end 836 and at least one internal second retention tab 854, 854' defined on the first end 838. In such a configuration, the retention tabs face inward and are internal to the first connector 820. The retention tabs are configured to matingly engage with one or more retention slots (e.g., retention slot 866, retention slot 866', retention slot 870) defined on the bracket 860. The bracket 860 has a first side 880 opposite a second side 882, with the retention slots 866, 866' defined in the first side 880 and the retention slot 870 defined in the second side 882. In FIGs. 8A-8C, the retention tabs are illustrated on sides orthogonal to the hinge axis. In other aspects, the retention tabs may be on sides parallel to the hinge axis (A).

The clamp assembly 800 also includes a counterbore. In comparison to the clamp assembly 100, the counterbore is a fastener receiving chamber 856 that is defined in a bottom side 822 of the first connector 820. In the aspect illustrated in FIGs. 8A-8C, the fastener receiving chamber 856 is defined by a first side 832 opposite a second side 834, the first end 838 opposite the second end 836, and a closed top side 839. In such a configuration, the first side 832, second side 834, first end 838, and second end 836 may be located within the fastener receiving chamber 856. The fastener receiving chamber 856 is closed-ended at a passageway side of the counterbore, for example at the closed top side 839. The closed top side 839 prevents access to a support structure connector 888 through the counterbore (e.g., fastener receiving chamber 856) when the clamp 810 is connected to the bracket 860.

Referring now to FIGs. 9A-9C, a clamp assembly 900 is illustrated. The clamp assembly 900 is similar to the clamp assembly 100 illustrated in FIGs. 1-4 and described above, except as detailed below. Thus, the clamp assembly 900 includes a clamp 910, a first connector 920, a first side 922, a second side 924, a second connector 940, a bracket 960 having a first end 976 opposing a second end 978, a base 982, and a hinge member 906. The hinge member 906 connects the first connector 920 to the second connector 940 and defines a hinge axis (A). The first side 922 is opposite the second side 924. Alternatively, as illustrated in FIGs. 9A and 9B, the first connector 920 further includes a third side 926 opposite a fourth side 928 and the bracket 960 includes a third side 980 opposite a fourth side 984. The first and second sides 922, 924 are orthogonal to the third and fourth sides 980, 984. The third side 980 and the fourth side 984 are orthogonal to the hinge axis. A first retainer portion 963 may be defined on the third side 926, and a second retainer portion 964 may be defined on the fourth side 928. At least one first retention tab 948, 948' is defined on the third side 926 and at least one second retention tab 952 is defined on the fourth side 928. Mating retention slots 961, 961', 962 are defined in the third and fourth sides 980, 984 of the bracket 960. The first retention tab(s) 948, 948' are configured to be received onto the at least one retention slot 961, 961', and the second retention tab(s) 952 are configured to be received onto the at least one retention slot 962 to connect the bracket 960 to the clamp 910.

FIG. 9D illustrates an optional configuration of the bracket (e.g., second bracket 960'), where the base 982 includes an upwardly extending lanced tab 990 that is configured to engage a face of a head 930 of a fastener (e.g., fastener 420) to prevent rotation of the fastener once it is threaded into a threaded orifice (e.g., threaded orifice 430 of support structure 440). In this way, the lanced tab 990 restrains the head 930 of the fastener from turning (e.g., from turning within the counterbore (e.g., counterbore 156)). This may provide an option of installing a nut (not illustrated) below the support structure into which the fastener (e.g., threaded bolt) is threaded to attach the bracket 960' to the support structure.

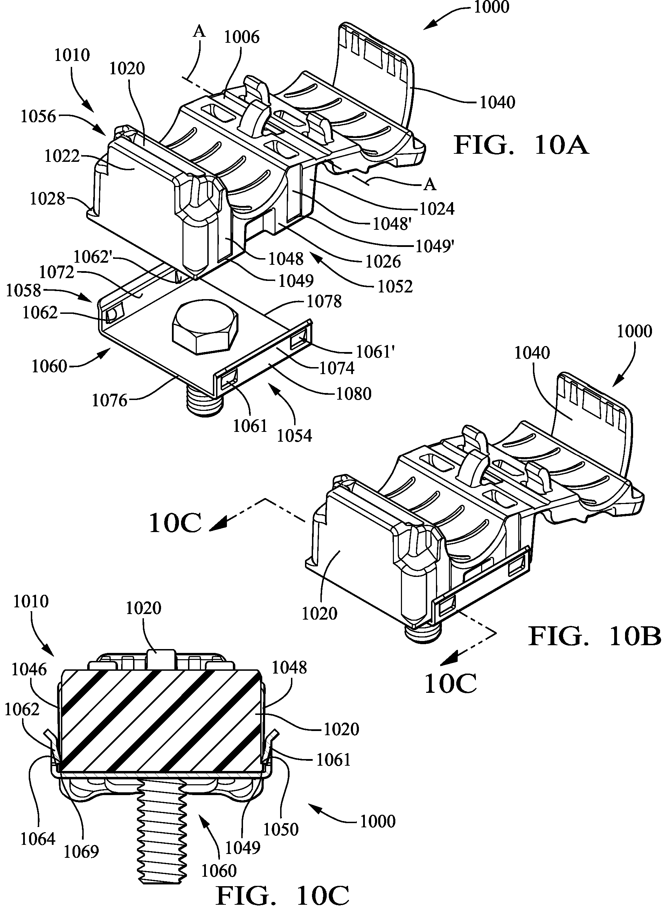

FIGs. 10A-10C illustrate a clamp assembly 1000. The clamp assembly 1000 is similar to the clamp assembly 100 illustrated in FIGs. 1-4 and described above, except as detailed below. Thus, the clamp assembly 1000 includes a clamp 1010, a first connector 1020, a first side 1022 opposite a second side 1024, a third side 1026 opposite a fourth side 1028, a second connector 1040, a first retainer portion 1052, a second retainer portion 1054, a third retainer portion 1056, a fourth retainer portion 1058, a bracket 1060 having a first end 1076 opposing a second end 1078, a first arm 1072, a second arm 1074, and a hinge member 1006. The hinge member 1006 connects the first connector 1020 to the second connector 1040 and defines a hinge axis (A). In FIGs. 1-4, the retention portions for the clamp assembly 100 include retention tabs and retention slots for connecting the clamp 110 to the bracket 160. Alternatively, as illustrated in the aspect of FIGs. 10A-10C, one or more lanced tabs that extend from the bracket 1060 may be utilized for connecting the clamp 1010 to the bracket 1060.

The lanced tabs may be configured to penetrate into a side (e.g., first side, second side, third side, fourth side) of the clamp 110. For example, one or more lanced tabs 1061, 1061 may extend inwardly from the second arm 1074, and one or more lanced tabs 1062, 1062' may extend inwardly from the first arm 1072. The lanced tabs may terminate in tips (e.g., tip 1050).

One or more retention grooves may be defined in the clamp 110 for receiving the tips of the lanced tabs. A retention groove (e.g., retention groove 1048, retention groove 1048', retention groove 1046) may terminate in a shoulder (e.g., shoulder 1049, shoulder 1049', shoulder 1069) or other structure configured to receive a tip (e.g., tip 1050, tip 1064) of the lanced tab (e.g., lanced tab 1061, lanced tab 1061', lanced tab 1062). For example, the third side 1026 of the first connector 1020 is illustrated as including a retention groove 1048 and a retention groove 1048', and the fourth side 1028 of the first connector 1020 includes at least one retention groove 1046. A retention groove (e.g., retention groove 1048, 1048') may terminate in a shoulder (e.g., shoulder 1049, shoulder 1049') that is configured to engage a tip (e.g., tip 1050, tip 1064).

In FIGs. 10A-10C, the first connector 1020 further includes the third side 1026 opposite the fourth side 1028 and the bracket 1060 includes a third side 1080 opposite a fourth side 1082. The first and second sides 1022, 1024 are orthogonal to the third and fourth sides 1026, 1028. The third side 1126 and the fourth side 1128 are orthogonal to the hinge axis. While in FIGs. 10A-10C the first and second retainer portions 1052, 1054 are illustrated on the third and fourth sides 1026, 1028 of the first connector 1020, in other aspects the first and second retainer portions 1052, 1054 may be located on the first and second sides 1022, 1024 of the first connector 1020. In other aspects, the first, second, third, and/or fourth retainer portions could be located on other sides of the clamp.

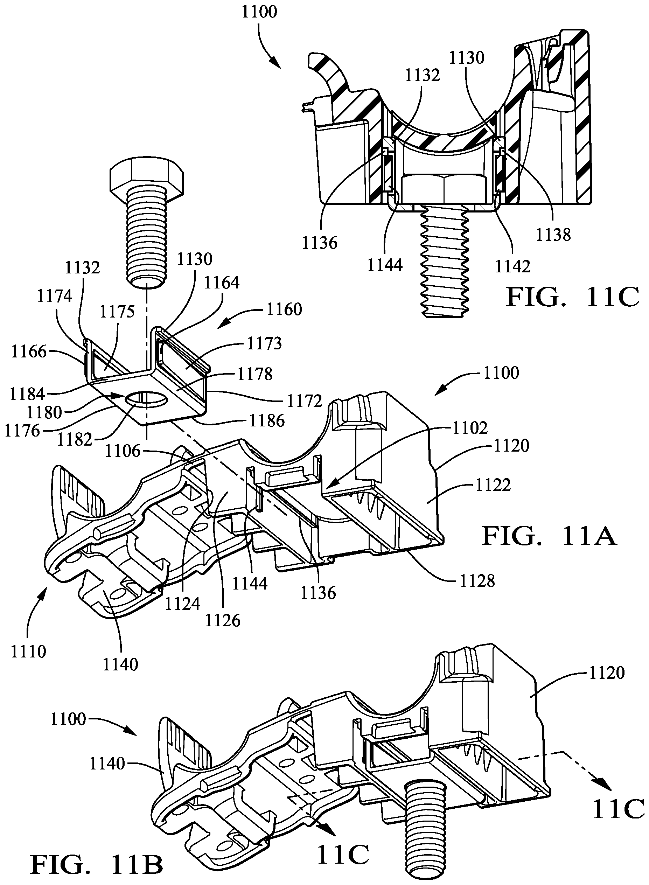

FIGs. 11A-11C illustrate a clamp assembly 1100. The clamp assembly 1100 is similar to the clamp assembly 100 illustrated in FIGs. 1-4 and described above, except as detailed below. Thus, the clamp assembly 1100 includes a clamp 1110, a first connector 1120, a first side 1122 opposite a second side 1124, a third side 1126 opposite a fourth side 1128, a second connector 1140, a bracket 1160 having a first end 1176 opposite a second end 1178 and a third end 1184 opposite a fourth end 1186, a first arm 1172, a second arm 1174, a support structure connector 1180, an aperture 1182, and a hinge member 1106. The hinge member 1106 connects the first connector 1120 to the second connector 1140 and defines a hinge axis.

In FIGs. 1-4, the clamp assembly 100 includes retention tabs and retention slots for connecting the clamp 110 to the bracket 160. Alternatively, as illustrated in FIGs. 11A and 11B, the first connector 1120 of the clamp 1110 is configured to slidably receive the bracket 1160. The clamp assembly 1100 includes the bracket 1160 configured to slide into a receiver 1102 defined in a side of the clamp 1110. The receiver 1102 may be defined in one or more of the first side 1122, second side 1124, third side 1126, or fourth side 1128 of the first connector 1120. In the aspect illustrated in FIGs. 11A-11C, the receiver 1102 is defined in the third side 1126, the third side 1126 orthogonal to the hinge axis. The receiver 1102 has an open end and a closed end. In other aspects, a receiver may pass completely through the first connector 1120.

The receiver 1102 includes two parallel shelves (e.g., shelf 1136, shelf 1138) configured to slidingly receive thereon a flange (e.g., flange 1130, flange 1132) of the bracket 1160. In aspects, one or both of the shelves or flanges may be elongated. The receiver 1102 further includes at least one ridge (e.g., ridge 1144, ridge 1142) configured to engage a lanced tab (e.g., first lanced tab 1173, second lanced tab 1175) of the bracket 1160 to retain the bracket 1160 within the receiver 1102. A lanced tab may end in a tip, which engages the ridge to hold the bracket 1160 inside the clamp 1110. FIG. 11B illustrates the bracket 1160 inserted into the receiver 1102 of the first connector 1120. The first arm 1172 includes a first lanced tab 1173 and the second arm 1174 includes a second lanced tab 1175. The lanced tabs 1173, 1175 extend from the bracket 1160 and may be utilized for connecting the clamp 1110 to the bracket 1160. In the aspect illustrated in FIGs. 11A and 11B, the lanced tab 1173 extends outwardly from the first arm 1172 and the lanced tab 1175 extends outwardly from the second arm 1174. The lanced tabs 1173, 1175 include distal ends (e.g., distal end 1164, distal end 1166) configured to engage with a ridge (e.g. ridge 1142, ridge 1144) extending from an inside surface of the receiver 1102. In the aspect illustrated in FIGs. 11A-11C, the bracket 1160 is generally U-shaped in cross-section.

FIG. 12 illustrates a bracket 1260 that may be used with any aspect of a clamp assembly described herein. The bracket 1260 is similar to the bracket 160 of the clamp assembly 100 illustrated in FIGs. 1-4 and described above, except as detailed below. Thus, the bracket 1260 includes a base 1262, a support structure connector 1280, an aperture 1282, a first arm 1272, a first end 1276, a third retainer portion 1264, a first retention slot 1266, a second arm 1274, a second end 1278, a fourth retainer portion 1268, a second retention slot 1270, a second retention slot 1270', and a release mechanism 1290. The aperture 1282 defined through the base 1262 is configured to receive a stud shaft 1220. The stud shaft 1220 may be threaded or unthreaded. The stud shaft 1220 may connect to or extend from a support structure. The bracket 1260 includes a least one barbed arm (e.g., barbed arm 1250, barbed arm 1250') that extends from the base 1262. The barbed arm is configured to engage the stud shaft 1220 to attach the base 1262 to the support structure.

FIG. 13 illustrates an optional configuration of a counterbore 1302 of a clamp assembly 1300 having a first connector 1310, where the counterbore 1302 includes at least one flange (e.g., flange 1304, flange 1304') that is configured to engage a face of a head 1330 of a fastener (e.g., threaded bolt) to prevent rotation of the threaded bolt once it is threaded into a threaded orifice (e.g., threaded orifice 430 of support structure 440). In this way, the flange 1304, 1304' may restrain the head 1330 of the fastener from turning (e.g., from turning within the counterbore 1302). This may provide an option of installing a nut (not illustrated) below the support structure (e.g., support structure 440) into which the fastener (e.g., threaded bolt) is threaded to attach the bracket to the support structure. In aspects, the clamp assembly 1300 may be configured similarly to clamp assembly 1000 of FIGs. 10A-10C.

Components of snap-on bracket clamp assemblies may be fabricated of any suitably resilient material, including polymeric materials and metal materials. In aspects, a clamp (e.g., clamp 110) is formed of a polymeric material. A suitable polymeric material may include one or more polymeric materials (e.g., nylon, polyamide (PA), PA12 PA46, PA66, PA66HS, PA66UV, OUV, PA66VO, PA66HIRHS, PA66HIRHSUV, polypropylene (PP), polyethylene (PE), polyphenylene sulfide (PPS), polyether ether ketone (PEEK), polyaryletherketone (PAEK), ethylene tetrafluoroethylene (ETFE), polyacetal (POM), UV stabilized polyacetal (POMUV)), thermoplastic materials, higher temperature resins, ultra-violet (UV) resistant resins, mixtures of the same, and the like. In aspects, a polymeric material may include one or more additives (e.g., heat stabilizers (e.g., copper iodide), impact modifiers (e.g., polyolefin, urethane, rubber), ultra-violet (UV) stabilizers (e.g., carbon black, hindered amine light stabilizers (HALS)), flame retardants (e.g., nitrogen-based halogen-free flame retardants, melamine cyanurate, melamine borate, ammonium polyphosphate), colorants, and the like. In aspects, a snap-on bracket (e.g., bracket 160) is formed of a metal material. A suitable metal material may include spring steel, stainless steel, and the like. One or more of the components of the clamp assembly may be formed of the same material as the other components or of a different material than the other components.

Some additional examples of snap-on bracket clamp assemblies are as follows:

Example 1. An apparatus comprising: a clamp comprising: a connector, the connector defines a first passageway configured to enclose at least a portion of an object; and a mounting member defined on the connector, the mounting member includes a first retainer; and a bracket comprising: a base that includes at least one second retainer configured to connect to the first retainer to connect the clamp to the bracket; and a support structure connector configured to attach the bracket to a support structure.

Example 2. The apparatus of Example 1, wherein the connector is a first connector and wherein the clamp further comprises a second connector that defines a second passageway configured to enclose the at least a portion of the object.

Example 3. The apparatus of Example 2, wherein the clamp further comprises a hinge member, wherein the second connector further comprises a first side opposite a second side, and wherein the hinge member hingedly connects a second side of the first connector to the second side of the second connector.

Example 4. The apparatus of Example 3, wherein the first connector includes a first locking mechanism, wherein the second connector includes a second locking mechanism, and wherein the first and second locking mechanisms are configured to lock a position of respective second sides of the first and second connectors together around the object with the object received in the first and second passageways.

Example 5. The apparatus of Example 4, further comprising: a hinge interlock mechanism configured to interlock the first side of the first connector and the first side of the second connector together when the first and second locking mechanisms lock a position of respective second sides of the first and second connectors together, the hinge interlock mechanism comprising: at least one arcuate projection extending from at least one of the first connector or the second connector; and at least one arcuate channel extending into at least one of the first connector or the second connector, the arcuate projection configured to be received into the arcuate channel; and a locking portion defined on at least one of a first arm or a second arm of the bracket, the locking portion configured to extend through the second connector and into the arcuate channel to engage the arcuate projection within the arcuate channel and prevent withdrawal of the arcuate projection from the arcuate channel.

Example 6. The apparatus of Example 4, wherein the first locking mechanism comprises: a slotted opening defined by the first connector; wherein the second locking mechanism comprises: a tongue member that projects from the second connector, the tongue member further including a plurality of serrations that extend along a length of the tongue member and across a width of the tongue member, the tongue member configured to be received in the slotted opening; and wherein the first locking mechanism further comprises: a pawl defined in the first connector, the pawl having a plurality of teeth disposed within the slotted opening, the plurality of teeth configured to interlock with the plurality of serrations when the tongue member is inserted into the slotted opening.

Example 7. The apparatus of Example 3, wherein the hinge member defines a hinge axis, and wherein the first side and the second side are parallel to the hinge axis.

Example 8. The apparatus of Example 3, wherein the hinge member defines a hinge axis, wherein the second connector further comprises a third side opposite a fourth side, wherein the first and second sides are orthogonal to the third and fourth sides, and wherein the third side and the fourth side are orthogonal to the hinge axis.

Example 9. The apparatus of Example 1, wherein the first retainer includes a first retainer portion and a second retainer portion, and wherein the second retainer includes a third retainer portion configured to connect with the first retainer portion and a fourth retainer portion configured to connect with the second retainer portion.

Example 10. The apparatus of Example 9, wherein the connector includes a first side opposite a second side, wherein the first retainer portion is defined on the first side, and wherein the second retainer portion is defined on the second side.

Example 11. The apparatus of Example 10, wherein the first retainer portion comprises at least one first retention tab on the first side, the second retainer portion comprises at least one second retention tab on the second side, the third retainer portion comprises at least one first retention slot, and the fourth retainer portion comprises at least one second retention slot, wherein the at least one first retention slot is configured to be received onto the at least one first retention tab, and wherein the at least one second retention slot is configured to be received onto the at least one second retention tab to connect the bracket to the clamp.

Example 12. The apparatus of Example 11, wherein the bracket further comprises: a first arm; and a second arm, wherein the first and second arms extend orthogonally from the base, wherein the first retention slot is defined on the first arm, and wherein the second retention slot is defined on the second arm.

Example 13. The apparatus of Example 9, wherein the clamp further comprises a hinge member that defines a hinge axis, wherein the connector includes a first side opposite a second side and a third side opposite a fourth side, the third side and fourth side orthogonal to the hinge axis, wherein the first retainer portion comprises at least one first retention groove including a first shoulder on the third side, wherein the second retainer portion comprises at least one second retention groove including a second shoulder on the fourth side, wherein the third retainer portion comprises at least one first lanced tab defining a first tip, wherein the fourth retainer portion comprises at least one second lanced tab defining a second tip, wherein the at least one first lanced tab is configured to be received into the first retention groove with the first tip engaging the first shoulder, and wherein the at least one second lanced tab is configured to be received into the second retention groove with the second tip engaging the second shoulder to connect the bracket to the clamp.

Example 14. The apparatus of Example 1, wherein the support structure connector comprises: an aperture defined through the base, the aperture configured to receive a threaded bolt configured to threadingly engage with a threaded orifice defined in the support structure to attach the base to the support structure; or an aperture defined through the base, the aperture configured to receive a stud shaft extending from the support structure and at least one barbed arm extending from the base, the barbed arm configured to engage the stud shaft to attach the base to the support structure.

Example 15. The apparatus of Example 1, wherein the connector defines a counterbore therethrough and the support structure connector is accessible through the counterbore when the clamp is connected to the bracket.

Example 16. The apparatus of Example 1, wherein the connector defines a fastener receiving chamber including a closed end, the closed end configured to prevent access to the support structure connector through the fastener receiving chamber when the clamp is connected to the bracket.

Example 17. The apparatus of Example 1, wherein the first retainer includes a first retainer portion and a second retainer portion, wherein the connector includes a fastener receiving chamber, the fastener receiving chamber including a first end opposite a second end and a closed top side, wherein the first retainer portion is defined on the first end and the second retainer portion is defined on the second end, and wherein the first retainer portion and second retainer portion are internal to the connector.

Example 18. The apparatus of Example 1, wherein the first retainer includes a first retainer portion and a second retainer portion, wherein the clamp further comprises a hinge member that defines a hinge axis, wherein the connector includes a first side opposite a second side and a third side opposite a fourth side, the third side and fourth side orthogonal to the hinge axis, and wherein the first retainer portion is defined on the third side and the second retainer portion is defined on the fourth side.

Example 19. The apparatus of Example 1, wherein the connector of the clamp is configured to slidably receive the bracket at a receiver defined in a third side of the connector, the receiver including at least one shelf configured to slidingly receive thereon a flange of the bracket.

Example 20. An apparatus comprising: a metal bracket configured to attach to a support structure; and a mounting clamp formed of a polymeric material, the mounting clamp configured to snap onto the metal bracket, the mounting clamp comprising: a first connector hingedly connected to a second connector, the first and second connectors configured to surround an object, and the first and second connectors configured to connect with one another to form the object into a bundle.

Although implementations of snap-on bracket clamp assemblies, techniques for manufacturing snap-on bracket clamp assemblies, and techniques for using snap-on bracket clamp assemblies have been described in language specific to certain features and/or methods, the subject of the appended claims is not necessarily limited to the specific features or methods described. Rather, the specific features and methods are disclosed as example implementations of snap-on bracket clamp assemblies, techniques for manufacturing snap-on bracket clamp assemblies, and techniques for using snap-on bracket clamp assemblies.

Unless context dictates otherwise, use herein of the word "or" may be considered use of an "inclusive or," or a term that permits inclusion or application of one or more items that are linked by the word "or" (e.g., a phrase "A or B" may be interpreted as permitting just "A," as permitting just "B," or as permitting both "A" and "B"). Also, as used herein, a phrase referring to "at least one of' a list of items refers to any combination of those items, including single members. For instance, "at least one of a, b, or c" can cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c, or any other ordering of a, b, and c). Further, items represented in the accompanying figures and terms discussed herein may be indicative of one or more items or terms, and thus reference may be made interchangeably to single or plural forms of the items and terms in this written description.

## Claims

1. An apparatus comprising:
a clamp comprising:
a connector, the connector defines a first passageway configured to enclose at least a portion of an object; and
a mounting member defined on the connector, the mounting member includes a first retainer; and
a bracket comprising:
a base that includes at least one second retainer configured to connect to the first retainer to connect the clamp to the bracket; and
a support structure connector configured to attach the bracket to a support structure.

2. The apparatus of claim 1, wherein the connector is a first connector and wherein the clamp further comprises a second connector that defines a second passageway configured to enclose the at least a portion of the object.

3. The apparatus of claim 2,
wherein the clamp further comprises a hinge member,
wherein the second connector further comprises a first side opposite a second side, and
wherein the hinge member hingedly connects a second side of the first connector to the second side of the second connector.

4. The apparatus of claim 3,
wherein the first connector includes a first locking mechanism,
wherein the second connector includes a second locking mechanism, and wherein the first and second locking mechanisms are configured to lock a position of respective second sides of the first and second connectors together around the object with the object received in the first and second passageways.

5. The apparatus of claim 4, further comprising:
a hinge interlock mechanism configured to interlock the first side of the first connector and the first side of the second connector together when the first and second locking mechanisms lock a position of respective second sides of the first and second connectors together, the hinge interlock mechanism comprising:
at least one arcuate projection extending from at least one of the first connector or the second connector; and
at least one arcuate channel extending into at least one of the first connector or the second connector, the arcuate projection configured to be received into the arcuate channel; and
a locking portion defined on at least one of a first arm or a second arm of the bracket, the locking portion configured to extend through the second connector and into the arcuate channel to engage the arcuate projection within the arcuate channel and prevent withdrawal of the arcuate projection from the arcuate channel.

6. The apparatus of claim 4 or 5,
wherein the first locking mechanism comprises:
a slotted opening defined by the first connector;
wherein the second locking mechanism comprises:
a tongue member that projects from the second connector, the tongue member further including a plurality of serrations that extend along a length of the tongue member and across a width of the tongue member, the tongue member configured to be received in the slotted opening; and
wherein the first locking mechanism further comprises:
a pawl defined in the first connector, the pawl having a plurality of teeth disposed within the slotted opening, the plurality of teeth configured to interlock with the plurality of serrations when the tongue member is inserted into the slotted opening.

7. The apparatus of claim 3,
wherein the hinge member defines a hinge axis, and
wherein the first side and the second side are parallel to the hinge axis.

8. The apparatus of claim 3,
wherein the hinge member defines a hinge axis,
wherein the second connector further comprises a third side opposite a fourth side,
wherein the first and second sides are orthogonal to the third and fourth sides, and
wherein the third side and the fourth side are orthogonal to the hinge axis.

9. The apparatus of any one of the preceding claims, wherein the first retainer includes a first retainer portion and a second retainer portion, and wherein the second retainer includes a third retainer portion configured to connect with the first retainer portion and a fourth retainer portion configured to connect with the second retainer portion.

10. The apparatus of claim 9,
wherein the connector includes a first side opposite a second side,
wherein the first retainer portion is defined on the first side, and
wherein the second retainer portion is defined on the second side.

11. The apparatus of claim 10,
wherein the first retainer portion comprises at least one first retention tab on the first side, the second retainer portion comprises at least one second retention tab on the second side, the third retainer portion comprises at least one first retention slot, and the fourth retainer portion comprises at least one second retention slot,
wherein the at least one first retention slot is configured to be received onto the at least one first retention tab, and
wherein the at least one second retention slot is configured to be received onto the at least one second retention tab to connect the bracket to the clamp.

12. The apparatus of claim 11, wherein the bracket further comprises:
a first arm; and
a second arm,
wherein the first and second arms extend orthogonally from the base,
wherein the first retention slot is defined on the first arm, and
wherein the second retention slot is defined on the second arm.

13. The apparatus of claim 9,
wherein the clamp further comprises a hinge member that defines a hinge axis,
wherein the connector includes a first side opposite a second side and a third side opposite a fourth side, the third side and fourth side orthogonal to the hinge axis,
wherein the first retainer portion comprises at least one first retention groove including a first shoulder on the third side,
wherein the second retainer portion comprises at least one second retention groove including a second shoulder on the fourth side,
wherein the third retainer portion comprises at least one first lanced tab defining a first tip,
wherein the fourth retainer portion comprises at least one second lanced tab defining a second tip,
wherein the at least one first lanced tab is configured to be received into the first retention groove with the first tip engaging the first shoulder, and
wherein the at least one second lanced tab is configured to be received into the second retention groove with the second tip engaging the second shoulder to connect the bracket to the clamp.

14. The apparatus of any one of the preceding claims, wherein the support structure connector comprises:
an aperture defined through the base, the aperture configured to receive a threaded bolt configured to threadingly engage with a threaded orifice defined in the support structure to attach the base to the support structure; or
an aperture defined through the base, the aperture configured to receive a stud shaft extending from the support structure and at least one barbed arm extending from the base, the barbed arm configured to engage the stud shaft to attach the base to the support structure.

15. The apparatus of any one of the preceding claims, wherein the connector defines a counterbore therethrough and the support structure connector is accessible through the counterbore when the clamp is connected to the bracket.

16. The apparatus of any one of the preceding claims, wherein the connector defines a fastener receiving chamber including a closed end, the closed end configured to prevent access to the support structure connector through the fastener receiving chamber when the clamp is connected to the bracket.

17. The apparatus of any one of the preceding claims,
wherein the first retainer includes a first retainer portion and a second retainer portion,
wherein the connector includes a fastener receiving chamber, the fastener receiving chamber including a first end opposite a second end and a closed top side,
wherein the first retainer portion is defined on the first end and the second retainer portion is defined on the second end, and
wherein the first retainer portion and second retainer portion are internal to the connector.

18. The apparatus of any one of the preceding claims,
wherein the first retainer includes a first retainer portion and a second retainer portion,
wherein the clamp further comprises a hinge member that defines a hinge axis, wherein the connector includes a first side opposite a second side and a third side opposite a fourth side, the third side and fourth side orthogonal to the hinge axis, and
wherein the first retainer portion is defined on the third side and the second retainer portion is defined on the fourth side.

19. The apparatus of any one of the preceding claims, wherein the connector of the clamp is configured to slidably receive the bracket at a receiver defined in a third side of the connector, the receiver including at least one shelf configured to slidingly receive thereon a flange of the bracket.

20. An apparatus of any one of the preceding claims, where:
the bracket configured to attach to a support structure is a metal bracket; and/or
the mounting member is formed of a polymeric material, in particular as mounting clamp, with the mounting member configured to snap onto the metal bracket, the mounting member comprising:
the first connector hingedly connected to the second connector, the first and second connectors configured to surround an object, and the first and second connectors configured to connect with one another to form the object into a bundle.
